# EUROPÄISCHE PATENTSCHRIFT

(11) **EP 2 594 174 B1**
(45) Veröffentlichungstag und Bekanntmachung des Hinweises auf die Patenterteilung: **30.10.2013**
(21) Anmeldenummer: 11401635.5
(22) Anmeldetag: 18.11.2011
(51) Int. Cl.: A47J 31/60, A47J 31/44, A47J 31/46

(54) **Getränkebereiter**
Beverage preparation machine
Dispositif de préparation de boissons

(43) Veröffentlichungstag der Anmeldung: 22.05.2013
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 2 196 118
- EP-A1- 2 272 408
- WO-A2-2010/044116
- WO-A2-2011/015963

## Beschreibung

Die Erfindung betrifft einen Getränkebereiter nach dem Oberbegriff des Patentanspruches 1 sowie ein Verfahren zur Spülung und ein Verfahren zur Reinigung des Getränkebereiters.

Die hier in Rede stehenden Getränkebereiter können beispielsweise Espressomaschinen, Kaffeemaschinen, Kaffeeautomaten, Teebereiter, Saftzentrifugen oder ähnliche Geräte beziehungsweise Kombinationen aus den genannten Geräten sein.

Aus der WO 2009/027053 A1 ist zum Beispiel ein Kaffeeautomat als Getränkebereiter bekannt, der als Einbaugerät in einem Küchenschrank ausgeführt ist. In den Getränkebereiter ist ein Flüssigkeitsbehälter lösbar eingesetzt. Ein derartiger Flüssigkeitsbehälter ist hierbei beispielsweise mit Milch für die Zubereitung eines aus Kaffee und Milch bestehenden Mischgetränkes gefüllt. Auf der Innenseite einer Tür des Getränkebereiters ist zur Aufnahme des Flüssigkeitsbehälters ferner eine Aufnahmevorrichtung vorhanden. Darüber hinaus offenbart die genannte Druckschrift, dass der Flüssigkeitsbehälter von außerhalb des Getränkebereiters sichtbar ist beziehungsweise Teile des Flüssigkeitsbehälters sichtbar sind. Dies hat den Vorteil, dass beispielsweise eine optische Sichtkontrolle des Füllstandes des Flüssigkeitsbehälters erfolgen kann. Als nachteilig ist jedoch zu betrachten, dass die Verbindungen zwischen Flüssigkeitsbehälter und einem in dem Getränkebereiter vorhandenen Strömungsleitungssystem schwierig zu reinigen sind.

Die WO 2010/044116 A2 offenbart einen Getränkebereiter mit einem Flüssigkeitsbehälter mit einer darin angeordneten Steigleitung und ein strömungsleitend mit dem Flüssigkeitsbehälter verbundenes Mehrwegeventil, die zusammen Bestandteile eines Strömungsleitungssystems sind, wobei das Mehrwegeventil zumindest eine erste Strömungsleitung und einen an eine zweite Strömungsleitung angeschlossenen Auslassstutzen, sowie eine Verstelleinheit (Ventile) zum wahlweisen Öffnen und Verschließen einer oder mehrerer Strömungsleitungen umfasst. Der Flüssigkeitsbehälter ist hierbei ferner mit einer Venturieinheit versehen, um Flüssigkeit aus dem Behälter abzusaugen bzw. aufzuschäumen, wenn Dampf durch die entsprechenden Leitungen geleitet wird, wobei die Venturieinheit einen Stutzen aufweist, der in einen korrespondierenden Anschlussstutzen des Mehrwegventils eingesteckt werden kann.

Die WO 2011/015963 A2 offenbart einen Getränkebereiter, an den ein Flüssigkeitsbehälter fluidisch angekoppelt werden kann. Der Behälter umfasst dabei im Deckelbereich eine Venturieinheit, um mittels Dampfzufuhr ein Absaugen aus dem Behälter zu bewirken. Der Behälter mit der gesamten Venturieinheit ist dabei mittels zusätzlicher Rohre (23, 21) mit dem Leitungssystem des Getränkebereiters verbunden.

Andere, bereits im Einsatz befindliche Getränkebereiter sind noch unbefriedigender in der Handhabung. So ist es beispielsweise üblich, eine Verkaufsverpackung mit Milch neben dem Getränkebereiter aufzustellen und eine Milchleitung in die Verkaufsverpackung zu führen. Hierbei ist keine visuelle Kontrolle des Füllstandes des Flüssigkeitsbehälters möglich. Darüber hinaus ist diese Lösung zeitintensiv, aus hygienischen Gründen bedenklich und es besteht die Gefahr, dass der Flüssigkeitsbehälter während der Vorbereitung oder Verwendung des Getränkebereiters umgestoßen wird. Ein weiterer Nachteil besteht darin, dass für den Flüssigkeitsbehälter ein vom Getränkebereiter unabhängiger Platz zur Verfügung stehen muss.

Ein Getränkebereiter zur wahlweisen Herstellung unterschiedlicher Kaffeegetränke geht aus der EP 2 196 118 A1 hervor. Dieser Getränkebereiter weist einen Flüssigkeitsbehälter und ein strömungsleitend mit dem Flüssigkeitsbehälter verbundenes Mehrwegeventil mit einem Gehäuse auf, die zusammen Bestandteile eines Strömungsleitungssystems sind. Das Mehrwegeventil ist mit einem an eine erste Strömungsleitung angeschlossenen Spülstutzen und mit einem an eine zweite Strömungsleitung angeschlossenen Auslassstutzen ausgestattet und weist eine Verstelleinheit zum wahlweisen Öffnen und Verschließen einer oder mehrerer der Strömungsleitungen auf. Auf die an dem Mehrwegeventil vorhandenen Stutzen werden bei dieser Lösung Strömungsleitungen aufgesetzt, die zumeist aus flexiblen Schläuchen bestehen und damit die eingangs bereits erwähnten Nachteile bei der Reinigung aufweisen.

Der Erfindung stellt sich somit das Problem, einen Getränkebereiter zur Verfügung zu stellen, der über einen möglichst langen Zeitraum einsetzbar ist und dessen Reinigung in einfacher, hygienisch einwandfreier Weise, möglichst automatisiert erfolgen kann, ohne dass erhebliche Montageaufwendungen erforderlich werden.

Es ist daher auch ein Verfahren zur Spülung und/oder Reinigung des Getränkebereiters anzugeben.

Erfindungsgemäß wird dieses Problem durch einen Getränkebereiter mit den Merkmalen des Patentanspruches 1 sowie durch die Verfahren in den Patentansprüchen 11 und 12 gelöst. Vorteilhafte Ausgestaltungen und Weiterbildungen der Erfindung ergeben sich aus den jeweils nachfolgenden Unteransprüchen.

Ein Getränkebereiter zur wahlweisen Herstellung unterschiedlicher Getränke, der einen Flüssigkeitsbehälter und ein strömungsleitend mit dem Flüssigkeitsbehälter verbundenes Mehrwegeventil mit einem Gehäuse aufweist, die zusammen Bestandteile eines Strömungsleitungssystems sind, wobei das Mehrwegeventil über zumindest einen an eine erste Strömungsleitung angeschlossenen Spülstutzen und wenigstens einen an eine zweite Strömungsleitung angeschlossenen Auslassstutzen, sowie über eine Verstelleinheit zum wahlweisen Öffnen und Verschließen einer oder mehrerer der Strömungsleitungen verfügt, wurde erfindungsgemäß dahingehend weitergebildet, dass an dem Mehrwegeventil ein Anschlussstutzen ausgebildet ist und der Flüssigkeitsbehälter einen unmittelbar, passgenau und dichtend mit dem Anschlussstutzen verbindbaren Flansch aufweist.

Die mit der Erfindung erreichbaren Vorteile bestehen darin, dass die bisher erforderlichen Strömungsleitungen zwischen dem Mehrwegeventil und dem Flüssigkeitsbehälter vollständig entfallen können, weil der Flüssigkeitsbehälter unmittelbar in das Mehrwegeventil einsetzbar ist. Die Reduzierung der vorhandenen Strömungsleitungen führt damit insgesamt zu einer Vereinfachung und Verbesserung des Getränkebereiters und seiner Reinigung. Zudem kann der Getränkebereiter dadurch insgesamt kompakter ausgeführt werden, weil erforderlicher Bauraum für die entfallenen Strömungsleitungen eingespart wird.

Mit der Erfindung ist ferner eine Automatisierung der Reinigung möglich, ohne, dass der Flüssigkeitsbehälter aus dem Mehrwegeventil herausgelöst werden muss oder Strömungsleitungen abgetrennt werden müssen. Der Flüssigkeitsbehälter verbleibt folglich während der Reinigung in dem Getränkebereiter was eine erhebliche Vereinfachung der Handhabung darstellt.

Eine erste Ausgestaltung der Erfindung besteht darin, dass der Flansch als ein Anschlusszapfen ausgebildet ist.

Mit einem derartigen Anschlusszapfen besteht die vorteilhafte Möglichkeit, den Flüssigkeitsbehälter über eine Steckverbindung unmittelbar in das Mehrwegeventil einzuführen. Damit wurde quasi ein Schnelllösemechanismus geschaffen. Es bedarf hier keiner besonderen Erwähnung, dass selbstverständlich auch der umgekehrte Fall im Bereich der Erfindung liegt, wonach ein Anschlusszapfen im Getränkebereiter und ein korrespondierender Flansch am Flüssigkeitsbehälter vorhanden sind.

Zur Ansaugung der im Flüssigkeitsbehälter vorhandenen Flüssigkeit weist dieser eine Steigleitung auf, die in der Regel bis zum Boden des Flüssigkeitsbehälters reicht. Gemäß einem weiterführenden Gedanken der Erfindung wird davon ausgegangen, dass die im Flüssigkeitsbehälter vorhandene Steigleitung unmittelbar in den Flansch mündet. Somit geht bei in den Getränkebereiter eingesetztem Flüssigkeitsbehälter die Steigleitung unmittelbar in das Mehrwegeventil über. Durch diese Maßnahme wird eine erhebliche Vereinfachung und Verbesserung der Strömungsverhältnisse erreicht.

Der am Flüssigkeitsbehälter vorhandene Flansch muss nicht zwingend an dem Flüssigkeitsbehälter selbst vorhanden sein, sondern kann entsprechend einer erfindungsgemäßen Weiterbildung an einem Deckel des Flüssigkeitsbehälter vorgesehen werden. Diese Ausführungsvariante bietet sich an, da der Flüssigkeitsbehälter ohnehin einen Deckel aufweisen muss, um ihn zu befüllen oder erforderlichenfalls zu entleeren. Der Deckel ist konstruktiv einfacher mit einem Flansch auszustatten, als der Flüssigkeitsbehälter. Zudem vereinfacht sich dadurch auch die im Getränkebereiter erforderliche Aufnahmevorrichtung.

Von Bedeutung ist darüber hinaus die Möglichkeit, das Mehrwegeventil zu steuern beziehungsweise zu regeln. Hierzu geht ein anderer Vorschlag der Erfindung dahin, dass zum Öffnen und Verschließen einzelner Strömungsleitungen des Strömungsleitungssystems in dem Mehrwegeventil ein translatorisch bewegbarer Kolben mit integrierten Durchlässen und Verschlussflächen für die Strömungsleitungen aufgenommen ist. Mit anderen Worten ist der Kolben ähnlich einem Schieber ausgestaltet und verfügt über die genannten Anschlussflächen beziehungsweise Durchlässe.

Eine besonders einfache Möglichkeit, die translatorische Bewegung des Kolbens zu ermöglichen besteht darin, dass ein Linear- oder Schrittmotor mit einem geeigneten Getriebe kombiniert zum Einsatz kommen. Auf diese Weise kann ein sehr einfacher Motor eine Rotationsbewegung erzeugen, die mit Hilfe des Getriebes in eine translatorische Bewegung des Kolbens umgesetzt wird. Ein derartiger Motor ist zudem einfach anzusteuern und ermöglicht damit eine sehr flexible Steuerung beziehungsweise Regelung des Mehrwegeventils.

Nicht nur aus optischen Gesichtspunkten heraus, sondern auch aus funktionalen Erwägungen weist der Flüssigkeitsbehälter gemäß einer Ausgestaltung der Erfindung eine Kupplung auf, mittels der er in eine korrespondierende Aufnahmevorrichtung des Getränkebereiters einsetzbar ist. Mit anderen Worten passen Aufnahmevorrichtung und Kupplung optimal ineinander.

Eine Weiterführung dieses Erfindungsgedankens führt dahin, dass die Kupplung an dem Deckel des Flüssigkeitsbehälters ausgebildet ist. Auf diese Weise lässt sich der Deckel nicht nur mit einem Flansch, sondern auch mit der erwähnten Kupplung ausstatten. Da ein derartiger Deckel beispielsweise aus einem Kunststoff bestehen kann, lassen sich die einzelnen Funktionselemente unmittelbar bei der Herstellung des Deckels an diesem anformen beziehungsweise ausbilden, was eine erhebliche konstruktive und fertigungstechnische Vereinfachung darstellt.

Eine spezielle Ausgestaltungsvariante der Verbindung zwischen Getränkebereiter und Flüssigkeitsbehälter besteht darin, dass die Aufnahmevorrichtung eine in Einschubrichtung ansteigende Führungsnut und der Flüssigkeitsbehälter an seinem Deckel eine hierzu komplementäre Schrägfläche als Kupplung aufweist.

Um dem Anwender eines erfindungsgemäßen Getränkebereiters ein Gefühl dafür zu vermitteln, wann der Flüssigkeitsbehälter korrekt in die korrespondierende Aufnahmevorrichtung eingesetzt ist, wird darüber hinaus vorgeschlagen, dass der in den Getränkebereiter eingesetzte Flüssigkeitsbehälter durch ein in eine korrespondierende Ausnehmung einrückendes elastisches Glied oder durch eine Feder-Kugel-Rastvorrichtung lösbar in dem Getränkebereiter fixiert ist. Diese Fixierung hat zudem den Vorteil, dass der Flüssigkeitsbehälter nicht ohne weiteres aus dem Getränkebereiter herausgelöst werden kann und zudem kipp- und bewegungsfrei aufgenommen ist.

Das erfindungsgemäße Verfahren zur Spülung eines Getränkebereiters ist durch folgende Verfahrensschritte gekennzeichnet:
- Start der Funktion "Spülung" am Getränkebereiter manuell durch den Benutzer oder automatisiert durch das Gerät,
- Freischaltung der zu spülenden Strömungsleitungen über das Mehrwegeventil,
- Förderung von Frischwasser aus einem Tank des Getränkebereiters mittels einer Pumpe und
- Spülung der Strömungsleitungen.

Erfindungsgemäß wird aus dem in dem Getränkebereiter vorhandenen Tank das Wasser entnommen, erforderlichenfalls erhitzt und anschließend durch das Mehrwegeventil und den Anschlussstutzen in die Steigleitung des Flüssigkeitsbehälters bzw. über die Anschlussleitung zum Auslauf gepumpt, so dass dadurch eine Spülfunktion erreicht wird. Zur Unterstützung dieser Funktion kommt eine Pumpe zum Einsatz. Die Spülfunktion ist deshalb von Bedeutung, weil damit eine rückstandsfreie Strömungsleitung erreicht wird und keine Vermengung unterschiedlicher Flüssigkeiten erfolgt, auch, wenn unterschiedliche Flüssigkeiten nacheinander durch dieselben Strömungsleitungen geführt werden.

Darüber hinaus ist das erfindungsgemäße Verfahren zur Reinigung eines Getränkebereiters durch folgende Verfahrensschritte gekennzeichnet:
- Start der Funktion "Reinigung" am Getränkebereiter manuell durch den Benutzer oder automatisiert durch das Gerät,
- Freischaltung der zu reinigenden Strömungsleitungen über das Mehrwegeventil,
- Förderung des Reinigungsmittels aus einem Tank des Getränkebereiters mittels einer Pumpe, Reinigung der Strömungsleitungen mittels einer Pumpe,
- Förderung von Frischwasser aus einem Tank des Getränkebereiters mittels einer Pumpe und Spülung der Strömungsleitungen.

Im Unterschied zur Spülung ist in regelmäßigen Abständen eine Reinigung des Getränkebereiters erforderlich, um sämtliche Flüssigkeiten führende Strömungsleitungen sowie die einzelnen Aggregate im Strömungsleitungssystem zu reinigen und keimfrei zu halten. Insbesondere aus dem zuletzt genannten Grund wird auch ein Reinigungsmittel zum Einsatz gebracht, dass die erforderlichen Eigenschaften mit sich bringt. Das eingesetzte Frischwasser sowie das Reinigungsmittel kann erforderlichenfalls erhitzt werden.

Dabei kann gemäß einem weiterführenden Vorschlag die Zuführung des Reinigungsmittels über ein Mischventil, oder eine zeitgesteuert einsetzende Pumpe erfolgen. Die Pumpe wird in diesem Fall nur kurzzeitig betrieben, weil im Verhältnis zur benötigten Frischwassermenge nur eine relativ geringe Menge Reinigungsmittel erforderlich ist.

Zur Überwachung der Qualität der aus Frischwasser und Reinigungsmittel erzeugten Reinigungsflüssigkeit ist es von Vorteil, wenn während des Reinigungsprozesses beispielsweise eine pH-Werterfassung der aus Frischwasser und Reinigungsmittel bestehenden Reinigungsflüssigkeit erfolgt. Über den pH-Wert lässt sich die keimtötende Wirkung der Reinigungsflüssigkeit unmittelbar bestimmen. Zudem sind selbstverständlich auch andere Messverfahren möglich, stellen jedoch keinen wesentlichen Aspekt der Erfindung dar.

Neben dem Umstand, dass der Start der Funktion "Reinigung" und/oder "Spülung" manuell erfolgen kann, ist es ebenso möglich den Vorgang zu automatisieren und beispielsweise in vordefinierten Zeitabständen ablaufen zu lassen. Die hierfür benötigte Elektronik steht zur Verfügung.

Aus Sicherheitsgründen wird darüber hinaus vorgeschlagen, dass nach der Spülung/Reinigung eine Getränkezubereitung so lange nicht möglich ist, bis der mit den Überresten befüllte Flüssigkeitsbehälter aus dem Getränkebereiter entnommen, entleert und wieder in den Getränkebereiter eingesetzt worden ist. Dadurch wird die Zubereitung eines Getränks mit Milch erst nach der Spülung/Reinigung des milchführenden Systems ermöglicht.

Zur Überwachung dieses sehr vorteilhaften Verfahrensschrittes ist es möglich, die Erfassung des Ist-Zustandes mittels eines Füllstandssensors in dem Flüssigkeitsbehälter oder mittels eines mit dem Flüssigkeitsbehälter korrespondierenden Kontaktschalters am Getränkebereiter umzusetzen. Auf diese Weise kann wirksam verhindert werden, dass ein zuzubereitendes Getränk mit Resten der Spülung oder der Reinigung in Kontakt kommt.

Um sicherzustellen, dass sämtliche Reinigungsmittelreste aus dem Strömungsleitungssystem entfernt worden sind, wird ferner vorgeschlagen dass der Reinigung stets eine Spülung mit Frischwasser folgt. Die anschließende Entnahme und Entleerung der Behältnisse, die die entstandenen Abwässer aufnehmen, kann in der zuvor genannten Weise erfolgen.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt
- Figur 1:: einen Schnitt durch den oberen Abschnitt eines Flüssigkeitsbehälters mit angeschlossenem Mehrwegeventil,
- Figur 2:: einen Schnitt durch den oberen Abschnitt eines Flüssigkeitsbehälters mit angeschlossenem Mehrwegeventil und angrenzenden Teilen des Getränkebereiters
und
- Figur 3:: ein vereinfachtes Schema zur Darstellung der Verfahren "Spülung" und "Reinigung".

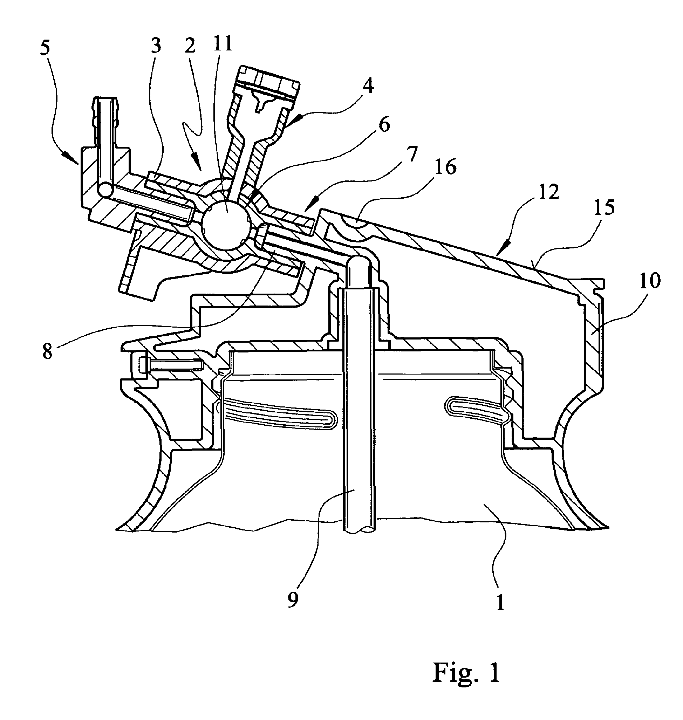

Die Detailansicht in Figur 1 zeigt beispielhaft eine Schnittdarstellung einer Ausführungsvariante eines erfindungsgemäßen Getränkebereiters. Gezeigt ist hierbei eine isolierte Baugruppe, bestehend aus einem Mehrwegeventil 2 und dem oberen Bereich eines Flüssigkeitsbehälters 1, der in seinem sich verjüngenden Abschnitt eine Öffnung aufweist, die durch einen Deckel 10 verschlossen ist. Innerhalb des Flüssigkeitsbehälters 1 befindet sich eine Steigleitung 9 zur Förderung der in dem Flüssigkeitsbehälter 1 enthaltenen Flüssigkeit. Diese Steigleitung 9 geht in den Deckel 10 über und mündet in einen zapfenförmig ausgeführten Flansch 8. Der Flansch 8 ist unmittelbar, dichtend und passgenau in einen Anschlussstutzen 7 des Mehrwegeventils 2 eingesetzt. Als Dichtung weist das Mehrwegeventil 2 in seinem Anschlussstutzen 7 einen weichelastischen Innenmantel auf, der vorliegend aus einem Gummiwerkstoff besteht. Das Mehrwegeventil 2 ist bei der vorliegenden Ausführungsvariante als ein Dreiwegeventil ausgeführt und verfügt neben dem Anschlussstutzen 7 über einen Spülstutzen 4 und einen Auslassstutzen 5. Innerhalb des Gehäuses 3 des Mehrwegeventils 2 ist ferner eine Verstelleinheit 6 vorhanden. Diese Verstelleinheit 6 weist als zentrales Element einen Kolben 11 auf, der über mehrere, in der Figur 1 nicht dargestellte Dichtflächen und Strömungskanäle verfügt. Der Kolben 11 ist bei dem dargestellten Mehrwegeventil 2 als ein translatorisch bewegbarer Kolben mit Strömungskanälen und Dichtflächen ausgeführt und kann durch seine Verschiebung innerhalb des Gehäuses 3 einzelne Strömungsleitungen innerhalb des Strömungsleitungssystems des Getränkebereiters öffnen oder schließen. Eine Möglichkeit der Ausführung eines derartigen Kolbens 11 geht beispielsweise aus der eingangs bereits zitierten EP 2 196 118 A1 und hier insbesondere aus der Figur 1 sowie der zugehörigen Beschreibung hervor.

Wesentlich für die erfindungsgemäße Lösung ist jedoch, dass der Flüssigkeitsbehälter 1 unmittelbar in das Mehrwegeventil 2 eingesetzt ist und damit Schläuche oder Verbindungsleitung in diesem Bereich vermieden werden können.

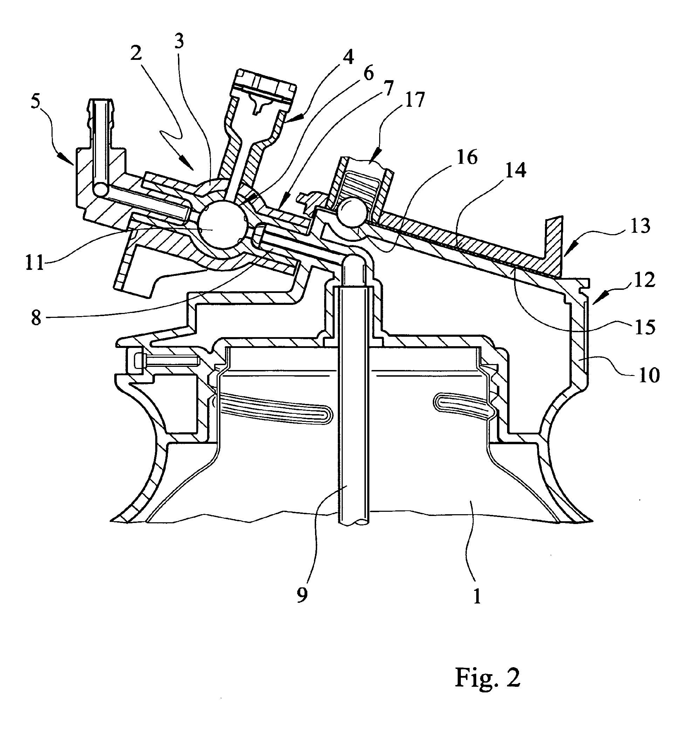

Die im Zusammenhang mit der Figur 1 erläuterte Ausführung eines Getränkebereiters ist in der Figur 2 mit Teilen des Getränkebereiters dargestellt. So wird aus der Figur 2 ersichtlich, dass der Deckel 10 des Flüssigkeitsbehälters 1 eine Schrägfläche 15 aufweist, die im vorliegenden Fall als Kupplung 12 ausgebildet ist. Diese Kupplung 12 greift beim Einsetzen des Flüssigkeitsbehälters 1 in eine komplementär gestaltete Aufnahmevorrichtung 13 des Getränkebereiters ein, wobei die Aufnahmevorrichtung 13 folglich eine korrespondierende Führungsnut 14 mit einer schräg ansteigenden Oberfläche aufweist. Um das korrekte Einsetzen des Flüssigkeitsbehälters 1 in den Getränkebereiter zu gewährleisten und für den Anwender spürbar zu machen, ist in die Schrägfläche 15 des Deckels 10 eine Ausnehmung 16 eingebracht, in die in der vorgesehenen Endposition eine Feder-Kugel-Rastvorrichtung 17 eingreift. Daraus ergibt sich eine Fixierung des Flüssigkeitsbehälters 1 und ein hörbares Geräusch für den Anwender.

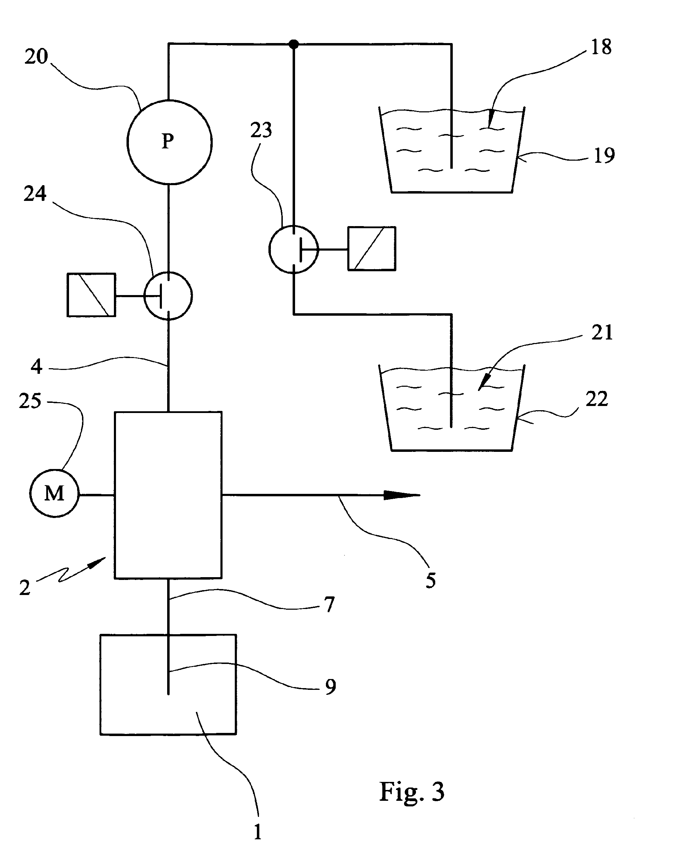

Aus der Darstellung in Figur 3 geht schließlich ein vereinfachtes Schema hervor, das die in einem erfindungsgemäßen Getränkebereiter ablaufenden Verfahren "Spülung" und "Reinigung" veranschaulicht. Dabei sind die wesentlichen Vorgänge beim Ablauf der Verfahren identisch.

Zunächst ist aus dem Schaltplan ersichtlich, dass der Kolben 11 des Mehrwegeventils 2 durch einen Schrittmotor 25 angetrieben wird, dessen Rotationsbewegung mit Hilfe eines Getriebes in eine translatorische Bewegung umsetzbar ist.

Zu Beginn wird das Verfahren "Spülung" am oder vom Getränkebereiter gestartet. Dies kann manuell erfolgen oder zeitgesteuert automatisiert sein. Anschließend erfolgt eine Freischaltung der zu spülenden Strömungsleitungen über das Mehrwegeventil 2. Hier kommt der zuvor erwähnte Schrittmotor 25 zum Einsatz. Über eine vorhandene Pumpe 20 wird in der Folge Frischwasser 18 aus einem Tank 19 gefördert, so dass dadurch die Strömungsleitungen gespült werden können. Zur Unterbrechung oder Wiederaufnahme des Verfahrens dient ein Mischventil 24, das bei dem gezeigten Beispiel durch einen Elektromagneten gesteuert ist und folglich ein Magnetventil darstellt. Da über das Mehrwegeventil 2 auch eine Verbindung zum Flüssigkeitsbehälter 1 besteht, ist auch die Möglichkeit gegeben, den Flüssigkeitsbehälter 1 zu spülen. Je nach Stellung des Mehrwegeventils 2 können somit auch der Spülstutzen 4 als Zuführung der Spülflüssigkeit, der Anschlussstutzen 7 und/oder der Auslassstutzen 5 mit den jeweils sich daran anschließenden Strömungsleitungen beziehungsweise Aggregaten gespült werden.

Auch das Verfahren "Reinigung" wird zu Beginn am oder vom Getränkebereiter gestartet. Bei der Durchführung des Verfahrens "Reinigung" wird die Zugabe des Reinigungsmittels über den Wassertank oder alternativ über ein Mischventil 23 die Einbringung von Reinigungsmittel 21 aus einem hierzu zur Verfügung stehenden Behälter 22 in die Frischwasser führende Strömungsleitung ermöglicht. Das ebenfalls als Magnetventil ausgestaltete Mischventil 23 wird über eine hierzu zur Verfügung stehende Elektronik geregelt beziehungsweise angesteuert.

Um zu vermeiden, dass Reste des Reinigungsmittels in den Strömungsleitungen oder in den angeschlossenen Aggregaten verbleiben, wird nach der Reinigung noch einmal ein Spülvorgang durchgeführt, der ausschließlich mit Frischwasser erfolgt. Hierbei ist das Mischventil 23 wieder geschlossen.

Soweit dies aus hygienischen Gründen möglich oder erforderlich ist, wird nicht ausgeschlossen, dass ein Reinigungsmittel unmittelbar in den mit Frischwasser 18 gefüllten Tank 19 gegeben wird. In diesem Fall wären die Verfahren "Spülung" und "Reinigung" von ihrem Ablauf her identisch.

### Bezugszeichenliste:

- 1.: Flüssigkeitsbehälter
- 2.: Mehrwegeventil
- 3.: Gehäuse
- 4.: Spülstutzen
- 5.: Auslassstutzen
- 6.: Verstelleinheit
- 7.: Anschlussstutzen
- 8.: Flansch
- 9.: Steigleitung
- 10.: Deckel
- 11.: Kolben
- 12.: Kupplung
- 13.: Aufnahmevorrichtung
- 14.: Führungsnut
- 15.: Schrägfläche
- 16.: Ausnehmung
- 17.: Feder-Kugel-Rastvorrichtung
- 18.: Frischwasser
- 19.: Tank
- 20.: Pumpe
- 21.: Reinigungsmittel
- 22.: Behälter
- 23.: Mischventil
- 24.: Magnetventil
- 25.: Schrittmotor

## Patentansprüche

1. Getränkebereiter zur wahlweisen Herstellung unterschiedlicher Getränke, aufweisend einen Flüssigkeitsbehälter (1) mit einer darin angeordneten Steigleitung (9) und ein strömungsleitend mit dem Flüssigkeitsbehälter (1) verbundenes Mehrwegeventil (2) mit einem Gehäuse (3), die zusammen Bestandteile eines Strömungsleitungssystems sind, wobei das Mehrwegeventil (2) zumindest einen an eine erste Strömungsleitung angeschlossenen Spülstutzen (4) und wenigstens einen an eine zweite Strömungsleitung angeschlossenen Auslassstutzen (5), sowie eine Verstelleinheit (6) zum wahlweisen Öffnen und Verschließen einer oder mehrerer der Strömungsleitungen aufweist,
**dadurch gekennzeichnet, dass**
an dem Mehrwegeventil (2) ein Anschlussstutzen (7) ausgebildet ist und der Flüssigkeitsbehälter (1) einen unmittelbar, passgenau und dichtend mit dem Anschlussstutzen (7) verbindbaren Flansch (8) aufweist, wobei die in dem Flüssigkeitsbehälter (1) vorhandene Steigleitung (9) unmittelbar in den Flansch (8) mündet.

2. Getränkebereiter nach Anspruch 1,
**dadurch gekennzeichnet, dass**
der Flansch (8) als Anschlusszapfen ausgebildet ist.

3. Getränkebereiter nach einem der vorstehend genannten Ansprüche,
**dadurch gekennzeichnet, dass**
der Flüssigkeitsbehälter (1) einen Deckel (10) aufweist, an dem der Flansch (8) ausgebildet ist.

4. Getränkebereiter nach einem der vorstehend genannten Ansprüche,
**dadurch gekennzeichnet, dass**
zum Öffnen und Verschließen einzelner Strömungsleitungen des Strömungsleitungssystems in dem Mehrwegeventil (2) ein translatorisch bewegbarer Kolben (11) mit integrierten Durchlässen und Verschlussflächen für die Strömungsleitungen aufgenommen ist.

5. Getränkebereiter nach Anspruch 4,
**dadurch gekennzeichnet, dass**
ein Linear- oder Schrittmotor und ein Getriebe zur Realisierung der Bewegung des Kolbens (11) vorhanden sind.

6. Getränkebereiter nach einem der vorstehend genannten Ansprüche,
**dadurch gekennzeichnet, dass**
der Flüssigkeitsbehälter (1) eine Kupplung (12) aufweist, mittels der er in eine korrespondierende Aufnahmevorrichtung (13) des Getränkebereiters einsetzbar ist.

7. Getränkebereiter nach Anspruch 6,
**dadurch gekennzeichnet, dass**
die Kupplung (12) an dem Deckel (10) des Flüssigkeitsbehälters (1) ausgebildet ist.

8. Getränkebereiter nach einem der Ansprüche 6 oder 7,
**dadurch gekennzeichnet, dass**
die Aufnahmevorrichtung (13) eine in Einschubrichtung ansteigende Führungsnut (14) und der Flüssigkeitsbehälter (1) an seinem Deckel (10) eine komplementäre Schrägfläche (15) als Kupplung (12) aufweist.

9. Getränkebereiter nach einem der vorstehend genannten Ansprüche ,
**dadurch gekennzeichnet, dass**
der in den Getränkebereiter eingesetzte Flüssigkeitsbehälter (1) durch ein in eine korrespondierende Ausnehmung (16) einrückendes elastisches Glied oder durch eine Feder-Kugel-Rastvorrichtung (17) lösbar in dem Getränkebereiter fixiert ist.

10. Verfahren zur Spülung eines Getränkebereiters nach einem der vorstehend genannten Ansprüche,
**gekennzeichnet durch** die Verfahrensschritte:
- Start der Funktion "Spülung" am Getränkebereiter,
- Freischaltung der zu spülenden Strömungsleitungen über das Mehrwegeventil (2),
- Förderung von Frischwasser aus einem Tank (19) des Getränkebereiters durch das Mehrwegventil und den Anschlussstutzen in die Steigleitung und / oder über die Anschlussleitung zum Auslauf mittels einer Pumpe (20) zur Spülung der Strömungsleitungen.

11. Verfahren zur Reinigung eines Getränkebereiters nach einem der vorstehend genannten Ansprüche,
**gekennzeichnet durch** die Verfahrensschritte:
- Start der Funktion "Reinigung" am Getränkebereiter,
- Freischaltung der zu reinigenden Strömungsleitungen über das Mehrwegeventil (2),
- Förderung des Reinigungsmittels (21) aus einem Tank (19) des Getränkebereiters sowie Einspeisung in die Frischwasser führende Strömungsleitung,
- Reinigung der Strömungsleitungen
- Förderung von Frischwasser (18) aus einem Tank (19) des Getränkebereiters mittels einer Pumpe (20),
- Spülen der Strömungsleitungen.

12. Verfahren nach Anspruch 11,
**dadurch gekennzeichnet, dass**
die Zuführung des Reinigungsmittels (21) über ein Mischventil (23), oder eine zeitgesteuert einsetzende Pumpe erfolgt.

13. Verfahren nach einem der Ansprüche 10 bis 12,
**dadurch gekennzeichnet, dass**
während des Reinigungsprozesses eine pH-Werterfassung der aus Frischwasser (18) und Reinigungsmittel (21) bestehenden Reinigungsflüssigkeit erfolgt.

14. Verfahren nach einem der Ansprüche 10 bis 13,
**dadurch gekennzeichnet, dass**
der Start der Funktion "Reinigung" und/oder "Spülung" manuell anwählbar ist oder in vordefinierten Zeitabständen automatisiert abläuft.

15. Verfahren nach einem der Ansprüche 10 bis 14,
**dadurch gekennzeichnet, dass**
nach der Spülung/Reinigung eine Getränkezubereitung so lange nicht möglich ist, bis der mit den Überresten befüllte Flüssigkeitsbehälter (1) aus dem Getränkebereiter entnommen, entleert und wieder in den Getränkebereiter eingesetzt worden ist.

16. Verfahren nach Anspruch 15,
**dadurch gekennzeichnet, dass**
die Erfassung des Ist-Zustandes mittels eines Füllstandssensors in dem Flüssigkeitsbehälter (1) oder mittels eines mit dem Flüssigkeitsbehälter (1) korrespondierenden Kontaktschalters am Getränkebereiter erfolgt

17. Verfahren nach Anspruch 10 oder 11,
**dadurch gekennzeichnet, dass**
dass das Frischwasser oder Reinigungsmittel erhitzt wird.

18. Verfahren nach einem der Ansprüche 10 bis 17,
**dadurch gekennzeichnet, dass**
der Reinigung eine Spülung folgt.

## Claims

1. Beverage preparation machine for the selective production of various beverages, comprising a liquid container (1) having a riser (9) arranged therein and a multi-way valve (2) having a housing (3), which valve is connected in a flow-conducting manner to the liquid container (1), which together are components of a flow conduction system, the multi-way valve (2) comprising at least one rinsing connection piece (4) which is connected to a first flow conduction line, at least one outlet connection piece (5) which is connected to a second flow conduction line, and an adjustment unit (6) for selectively opening and closing one or more of the flow conduction lines, **characterised in that** a connection piece (7) is formed on the multi-way valve (2) and the liquid container (1) comprises a flange (8) which can be connected directly to the connection piece (7) with an exact fit and in a sealing manner, the riser (9) provided in the liquid container (1) discharging directly into the flange (8).

2. Beverage preparation machine according to claim 1, **characterised in that** the flange (8) is formed as a connection pin.

3. Beverage preparation machine according to any of the preceding claims, **characterised in that** the liquid container (1) comprises a cover (10) on which the flange is formed (8).

4. Beverage preparation machine according to any of the preceding claims, **characterised in that** a piston (11) which can move in a translational manner and has integrated passages and closure faces for the flow conduction lines is received in the multi-way valve (2) for opening and closing individual flow conduction lines of the flow conduction system.

5. Beverage preparation machine according to claim 4, **characterised in that** a linear motor or a step motor and a gear mechanism are provided for bringing about the movement of the piston (11).

6. Beverage preparation machine according to any of the preceding claims, **characterised in that** the liquid container (1) comprises a coupling (12), by means of which the liquid container can be inserted into a corresponding receptacle (13) of the beverage preparation machine.

7. Beverage preparation machine according to claim 6, **characterised in that** the coupling (12) is formed on the cover (10) of the liquid container (1).

8. Beverage preparation machine according to either claim 6 or claim 7, **characterised in that**, as a coupling (12), the receptacle (13) comprises a guide groove (14) which rises in the insertion direction and the liquid container (1) comprises a complementary oblique face (15) on the cover (10) thereof.

9. Beverage preparation machine according to any of the preceding claims, **characterised in that** the liquid container (1) inserted in the beverage preparation machine is releasably fixed in the beverage preparation machine by a resilient element which engages in a corresponding recess (16) or by a spring-ball locking device (17).

10. Method for rinsing a beverage preparation machine according to any of the preceding claims, **characterised by** the method steps of:
- starting up the "rinsing" function on the beverage preparation machine,
- clearing the flow conduction lines to be rinsed by means of the multi-way valve (2),
- conveying fresh water from a tank (19) of the beverage preparation machine via the multi-way valve and the connection piece into the riser and/or via the connection line to the outlet by means of a pump (20) for rinsing the flow conduction lines.

11. Method for cleaning a beverage preparation machine according to any of the preceding claims, **characterised by** the method steps of:
- starting up the "cleaning" function on the beverage preparation machine,
- clearing the flow conduction lines to be cleaned by means of the multi-way valve (2),
- conveying the cleaning agent (21) from a tank (19) of the beverage preparation machine and feeding it into the flow conduction line carrying fresh water,
- cleaning the flow conduction lines,
- conveying fresh water (18) from a tank (19) of the beverage preparation machine by means of a pump (20),
- rinsing the flow conduction lines.

12. Method according to claim 11, **characterised in that** the cleaning agent (21) is supplied by means of a mixing valve (23) or a time-controlled inserting pump.

13. Method according to any of claims 10 to 12, **characterised in that** during the cleaning process pH levels are detected in the cleaning liquid, which consists of fresh water (18) and the cleaning agent (21).

14. Method according to any of claims 10 to 13, **characterised in that** starting up the "cleaning" and/or "rinsing" function can be selected manually or takes place in an automated manner at predefined time intervals.

15. Method according to any of claims 10 to 14, **characterised in that** a beverage cannot be prepared after cleaning/rinsing until after the liquid container (1) filled with the residues has been removed from the beverage preparation machine, emptied and re-inserted into the beverage preparation machine.

16. Method according to claim 15, **characterised in that** the current state is detected by means of a filling level sensor in the liquid container (1) or by means of a contact switch on the beverage preparation machine which communicates with the liquid container (1).

17. Method according to either claim 10 or claim 11, **characterised in that** the fresh water or cleaning agent is heated.

18. Method according to any of claims 10 to 17, **characterised in that** rinsing follows cleaning.

## Revendications

1. Préparateur de boissons pour la réalisation au choix de différentes boissons, présentant une cuve de liquide (1), logeant une colonne montante (9), et une vanne à plusieurs voies (2), raccordée à la cuve de liquide (1) pour réaliser l'écoulement, avec un carter (3), qui constituent ensemble des composants d'un système de conduite d'écoulement, la vanne à plusieurs voies (2) présentant au moins une tubulure de rinçage (4) raccordée à une première conduite d'écoulement et au moins une tubulure d'évacuation (5) raccordée à une deuxième conduite d'écoulement, ainsi qu'une unité de réglage (6) pour l'ouverture et la fermeture au choix d'une ou de plusieurs des conduites d'écoulement,
**caractérisé en ce que**,
sur la vanne à plusieurs voies (2), il est constitué une tubulure de raccordement (7), et la cuve de liquide (1) présente une bride (8) pouvant être raccordée à la tubulure de raccordement (7) de façon directe, ajustée avec précision et étanche, la colonne montante (9) qui est présente dans la cuve de liquide (1) débouchant directement dans la bride (8).

2. Préparateur de boissons selon la revendication 1,
**caractérisé en ce que**
la bride (8) est réalisée en tant qu'embout de raccordement.

3. Préparateur de boissons selon une des revendications citées précédemment,
**caractérisé en ce que**
la cuve de liquide (1) présente un couvercle (10) sur lequel est réalisée la bride (8).

4. Préparateur de boissons selon une des revendications citées précédemment,
**caractérisé en ce que**,
pour l'ouverture et la fermeture des différentes conduites d'écoulement du système de conduite d'écoulement, la vanne à plusieurs voies (2) loge un piston (11) pouvant être animé d'un mouvement de translation, avec des traversées et surfaces d'obturation intégrées pour les conduites d'écoulement.

5. Préparateur de boissons selon la revendication 4,
**caractérisé en ce**
**qu'**il est prévu un moteur linéaire ou pas à pas et un engrenage pour la réalisation du mouvement du piston (11).

6. Préparateur de boissons selon une des revendications citées précédemment,
**caractérisé en ce que**
la cuve de liquide (1) présente un accouplement (12) au moyen duquel la cuve peut être insérée dans un dispositif de réception (13) correspondant du préparateur de boissons.

7. Préparateur de boissons selon la revendication 6,
**caractérisé en ce que**
l'accouplement (12) est réalisé sur le couvercle (10) de la cuve de liquide (1).

8. Préparateur de boissons selon une des revendications 6 ou 7,
**caractérisé en ce que**
le dispositif de réception (13) présente une rainure de guidage (14) montant dans la direction d'insertion, et la cuve de liquide (1) présente, sur son couvercle (10), une face inclinée (15) complémentaire en tant qu'accouplement (12).

9. Préparateur de boissons selon une des revendications citées précédemment,
**caractérisé en ce que**
la cuve de liquide (1) insérée dans le préparateur de boissons est fixée de façon détachable dans le préparateur de boissons par un organe élastique s'enclenchant dans un creux (16) correspondant ou par un dispositif d'encliquetage (17) à ressort-bille.

10. Procédé de rinçage d'un préparateur de boissons selon une des revendications citées précédemment,
**caractérisé par** les étapes de procédé suivantes :
- démarrage de la fonction « rinçage » sur le préparateur de boissons,
- libération des conduites d'écoulement à rincer par le biais de la vanne à plusieurs voies (2),
- transport d'eau propre à partir d'un réservoir (19) du préparateur de boissons par la vanne à plusieurs voies (2) et la tubulure de raccordement dans la colonne montante et/ou par le biais de la conduite de raccordement vers l'évacuation au moyen d'une pompe (20) pour le rinçage des conduites d'écoulement.

11. Procédé de nettoyage d'un préparateur de boissons selon une des revendications citées précédemment,
**caractérisé par** les étapes de procédé suivantes :
- démarrage de la fonction « nettoyage » sur le préparateur de boissons,
- libération des conduites d'écoulement à nettoyer par le biais de la vanne à plusieurs voies (2),
- transport du produit nettoyant (21) à partir d'un réservoir (19) du préparateur de boissons ainsi que son introduction dans la conduite d'écoulement véhiculant l'eau propre,
- nettoyage des conduites d'écoulement,
- transport d'eau propre (18) à partir d'un réservoir (19) du préparateur de boissons au moyen d'une pompe (20),
- rinçage des conduites d'écoulement.

12. Procédé selon la revendication 11,
**caractérisé en ce que**
l'amenée du produit nettoyant (21) s'effectue par le biais d'une vanne mélangeuse (23) ou par le biais d'une pompe à action commandée par minuterie.

13. Procédé selon une des revendications 10 à 12,
**caractérisé en ce que**,
pendant le processus de nettoyage, il est effectué une saisie du pH du liquide de nettoyage composé d'eau propre (18) et de produit nettoyant (21).

14. Procédé selon une des revendications 10 à 13,
**caractérisé en ce que**
le démarrage de la fonction « nettoyage » et/ou « rinçage » peut être sélectionné manuellement ou bien **en ce qu'**il se déroule de façon automatisée à intervalles de temps prédéfinis.

15. Procédé selon une des revendications 10 à 14,
**caractérisé en ce que**,
après le rinçage/nettoyage, aucune préparation de boissons n'est possible tant que la cuve de liquide (1) contenant des restes n'a pas été extraite du préparateur de boissons, vidée et remise en place dans le préparateur de boissons.

16. Procédé selon la revendication 15,
**caractérisé en ce que**
la saisie de l'état effectif s'effectue au moyen d'un capteur de niveau dans la cuve de liquide (1) ou au moyen d'un contacteur placé sur le préparateur de boissons et correspondant avec la cuve de liquide (1).

17. Procédé selon la revendication 10 ou 11,
**caractérisé en ce que**
l'eau propre ou le produit nettoyant est chauffé(e).

18. Procédé selon une des revendications 10 à 17,
**caractérisé en ce que**
le rinçage est suivi d'un nettoyage.
